# EUROPÄISCHE PATENTSCHRIFT

(11) **EP 4 041 545 B1**
(45) Veröffentlichungstag und Bekanntmachung des Hinweises auf die Patenterteilung: **04.03.2026**
(21) Anmeldenummer: 20781027.6
(22) Anmeldetag: 05.10.2020
(51) Int. Cl.: B32B 17/10

(54) **VERFAHREN ZUR HERSTELLUNG EINER VERBUNDSCHEIBE MIT FUNKTIONSELEMENT**
METHOD FOR PRODUCING A COMPOSITE PANE WITH A FUNCTIONAL ELEMENT
PROCÉDÉ DE FABRICATION D'UNE VITRE COMPOSITE POURVUE D'UN ÉLÉMENT FONCTIONNEL

(30) Priorität: 10.10.2019 EP 19202366
(43) Veröffentlichungstag der Anmeldung: 17.08.2022
(73) Patentinhaber: Saint-Gobain Sekurit France, 60150 Thourotte (FR)
(72) Erfinder: VAN DER MEULEN, Uwe, 52385 Nideggen (DE); TINGS, Nino, 52249 Eschweiler (DE); KANNENGIESSER, Raphaela, 52064 Aachen (DE)
(74) Vertreter: Hermanns, Ellen
(86) Internationale Anmeldenummer: PCT/EP2020/077800
(87) Internationale Veröffentlichungsnummer: WO 2021/069354

(56) Entgegenhaltungen:
- WO-A1-2018/197235
- WO-A1-2019/150038
- WO-A1-2020/020614
- US-A1- 2016 325 529
- US-A1- 2018 370 195
- US-A1- 2019 134 954

## Beschreibung

Die Erfindung betrifft ein Verfahren zur Herstellung einer Verbundscheibe mit einem Funktionselement, eine mittels eines solchen Verfahrens hergestellte Verbundscheibe und deren Verwendung.

Verbundscheiben mit zusätzlicher Funktionalität sind in den letzten Jahren immer beliebter und gefragter geworden. Typischerweise wird eine zusätzliche Funktionalität bereitgestellt, indem mindestens eine Schicht aus beschichtetem oder getöntem Glas in einer Verbundglasstruktur verwendet wird, um beispielsweise Wärme- oder UV-reflektierende Eigenschaften bereitzustellen. Funktionalität kann jedoch auch erzielt werden, indem ein Funktionselement, d.h. ein Einlegeelement mit einer Funktionalität, in eine Verbundscheibe einlaminiert wird.

Das Funktionselement ist in der Regel von den äußeren Abmessungen her geringer als die resultierende Verbundscheibe, beispielsweise um das Funktionselement vor Feuchtigkeit und Umwelteinflüssen zu schützen. Üblicherweise wird das Funktionselement von einer zusätzlichen Zwischenschicht, welche eine Aussparung zur Aufnahme des Funktionselements aufweist, rahmenartig umgeben, um Lufteinschlüsse beim Laminieren zwischen zwei Zwischenschichten zu vermeiden.

In der EP 2 010 385 B1, der US 2009/0176101 A1 und der WO 2014/135467 A1 sind Verbundscheiben mit einem Funktionselement, das von einer Zwischenschicht rahmenartig umgeben ist, offenbart.

Derartige Verbundscheiben können nach einem Verfahren hergestellt werden, indem in einem ersten Schritt in eine erste Zwischenschicht eine Aussparung geschnitten wird, in einem zweiten Schritt die erste Zwischenschicht und ein in der Aussparung angeordnetes Funktionselement zwischen zwei weiteren Zwischenschichten angeordnet werden, in einem dritten Schritt die drei Zwischenschichten mit dem von der ersten Zwischenschicht rahmenartig umgegebenen Funktionselement zwischen zwei Scheiben angeordnet werden und in einem vierten Schritt die beiden Scheiben über die Zwischenschichten laminiert werden.

In der WO 2019150038 A1 ist eine Verbundscheibe mit einem Funktionselement offenbart. Die US 2016/325529A1 offenbart eine Verbundscheibe, die über sechs Zwischenschichten miteinander verbunden ist, wobei ein Funktionselement von einer der Zwischenschichten rahmenartig umgeben ist.

Der vorliegenden Erfindung liegt die Aufgabe zugrunde, ein verbessertes Verfahren zur Herstellung einer Verbundscheibe mit einem Funktionselement und eine verbesserte Verbundscheibe mit einem Funktionselement bereitzustellen.

Die Aufgabe der vorliegenden Erfindung wird durch ein Verfahren gemäß dem unabhängigen Anspruch 1 gelöst Bevorzugte Ausführungen gehen aus den Unteransprüchen hervor.

Das erfindungsgemäße Verfahren zur Herstellung einer Verbundscheibe umfasst zumindest die nachfolgenden Schritte:
a) Anordnen einer ersten thermoplastischen Zwischenschicht, einer zweiten thermoplastischen Zwischenschicht und einer dritten thermoplastischen Zwischenschicht vollflächig übereinander;
b) Verbinden der ersten thermoplastischen Zwischenschicht, der zweiten thermoplastischen Zwischenschicht und der dritten thermoplastischen Zwischenschicht zu einem Vorverbund;
c) bereichsweises Entfernen der dritten thermoplastischen Zwischenschicht zur Bildung einer Aussparung;
d) Einfügen eines Funktionselementes in die Aussparung in der dritten thermoplastischen Zwischenschicht zur Bildung eines Schichtenstapels;
e) Anordnen des Schichtenstapels zwischen einer ersten Scheibe und einer zweiten Scheibe;
f) Verbinden der ersten Scheibe und der zweiten Scheibe über den Schichtenstapel durch Lamination.

Es versteht sich, dass die Schritte a) bis f) des Verfahrens in der angegebenen Reihenfolge durchgeführt werden. Somit erfolgt der Schritt c), d.h. das bereichsweises Entfernen der dritten thermoplastischen Zwischenschicht zur Bildung einer Aussparung, erst nach dem Schritt b), d.h. dem Verbinden der ersten thermoplastischen Zwischenschicht, der zweiten thermoplastischen Zwischenschicht und der dritten thermoplastischen Zwischenschicht zu einem Vorverbund. Es wird somit in dem erfindungsgemäßen Verfahren erst die erste thermoplastische Zwischenschicht, die zweite thermoplastische Zwischenschicht und die dritte thermoplastische Zwischenschicht zu einem Vorverbund verbunden und dann die dritte thermoplastische Zwischenschicht zur Bildung einer Aussparung bereichsweise entfernt.

Erfindungsgemäß ist somit ein Verfahren zur Herstellung einer Verbundscheibe, wobei das Verfahren die folgende Schrittreihenfolge aufweist:
a) Anordnen einer ersten thermoplastischen Zwischenschicht, einer zweiten thermoplastischen Zwischenschicht und einer dritten thermoplastischen Zwischenschicht vollflächig übereinander;
b) Verbinden der ersten thermoplastischen Zwischenschicht, der zweiten thermoplastischen Zwischenschicht und der dritten thermoplastischen Zwischenschicht zu einem Vorverbund;
c) bereichsweises Entfernen der dritten thermoplastischen Zwischenschicht zur Bildung einer Aussparung;
d) Einfügen eines Funktionselementes in die Aussparung in der dritten thermoplastischen Zwischenschicht zur Bildung eines Schichtenstapels;
e) Anordnen des Schichtenstapels zwischen einer ersten Scheibe und einer zweiten Scheibe;
f) Verbinden der ersten Scheibe und der zweiten Scheibe über den Schichtenstapel durch Lamination.

Erfindungsgemäß weist das Funktionselement eine Dicke von ≥ 50 µm (Mikrometer), d.h. eine Dicke von größer oder gleich 50 µm, auf und die dritte thermoplastische Zwischenschicht weist eine Dicke auf, die im Wesentlichen der Dicke des Funktionselements entspricht, d.h. das Funktionselement und die dritte thermoplastische Zwischenschicht weisen im Wesentlichen die gleiche Dicke auf.

Im Wesentlichen die gleiche Dicke bedeutet, dass die Dicke um maximal 50 µm voneinander abweicht.

Erfindungsgemäß entsprechen die äußeren Abmessungen der Aussparung im Wesentlichen den äußeren Abmessungen des Funktionselements, d.h. die Aussparung und das Funktionselement haben im Wesentlichen die gleiche Geometrie.

Im Wesentlichen die gleichen äußeren Abmessungen bedeutet, dass die äußeren Abmessungen um maximal 1 mm, bevorzugt um maximal 50 µm voneinander abweichen.

Unter einem Funktionselement im Sinne der Erfindung ist ein Einlegeelement mit einer Funktionalität zu verstehen. Es versteht sich, dass ein Funktionselement auch mehr als eine Funktionalität aufweisen kann.

In Schritt e) wird der Schichtenstapel zwischen einer ersten Scheibe und einer zweiten Scheibe angeordnet. Es ist auch möglich, dass der Vorverbund aus Schritt b) auf eine erste Scheibe gelegt wird, dann Schritt c) und Schritt d) erfolgen und anschließend dann in Schritt e) eine zweite Scheibe auf den Schichtenstapel gelegt wird. Ebenso ist es möglich, dass der Vorverbund mit der Aussparung in der dritten thermoplastischen Zwischenschicht nach Schritt c) auf eine erste Scheibe gelegt wird, dann Schritt d) erfolgt und anschließend dann in Schritt e) eine zweite Scheibe auf den Schichtenstapel gelegt wird.

In einer bevorzugten Ausführungsform des erfindungsgemäßen Verfahrens umfasst das Verfahren in Schritt d) zur Bildung des Schichtenstapels als zusätzlichen Schritt das vollflächige Auflegen einer Schicht mit adhäsiven und/oder thermoplastischen Eigenschaften auf das Funktionselement und die dritte thermoplastische Zwischenschicht. Der Schichtenstapel umfasst in dieser Ausführungsform somit auch eine Schicht mit adhäsiven und/oder thermoplastischen Eigenschaften, die vollflächig auf die dritte thermoplastische Zwischenschicht und das in der Aussparung in der dritten thermoplastischen Zwischenschicht angeordnete Funktionselement aufgelegt wurde.

Alternativ oder zusätzlich kann in einer bevorzugten Ausführungsform des erfindungsgemäßen Verfahrens ein Funktionselement eingesetzt werden, das eine Dünnschicht mit adhäsiven und/oder thermoplastischen Eigenschaften umfasst, die eine Oberfläche des Funktionselements bildet. In dieser Ausführungsform wird das Funktionselement in dem erfindungsgemäßen Verfahren derartig in die Aussparung in der dritten thermoplastischen Zwischenschicht eingelegt, dass die Dünnschicht nicht direkt benachbart zur zweiten thermoplastischen Zwischenschicht angeordnet ist.

Die Dünnschicht mit adhäsiven und/oder thermoplastischen Eigenschaften kann dabei beispielsweise mit dem übrigen Funktionselement verklebt oder aber lose auf dieses aufgelegt sein.

Erfindungsgemäß ist folglich auch ein Verfahren, wobei zumindest
a) eine erste thermoplastische Zwischenschicht, eine zweite thermoplastische Zwischenschicht und eine dritte thermoplastische Zwischenschicht vollflächig übereinander angeordnet werden;
b) die erste thermoplastische Zwischenschicht, die zweite thermoplastische Zwischenschicht und die dritte thermoplastische Zwischenschicht zu einem Vorverbund verbunden werden;
c) die dritte thermoplastische Zwischenschicht zur Bildung einer Aussparung, bereichsweise entfernt wird;
d) ein Schichtenstapel gebildet wird, indem ein Funktionselement in die Aussparung in der dritten thermoplastischen Zwischenschicht eingefügt wird und eine Schicht mit adhäsiven und/oder thermoplastischen Eigenschaften vollflächig auf das Funktionselement und die dritte thermoplastische Zwischenschicht gelegt wird oder indem ein Funktionselement, das eine Dünnschicht mit adhäsiven und/oder thermoplastischen Eigenschaften umfasst, die eine Oberfläche des Funktionselements bildet, derartig in die Aussparung in der dritten thermoplastischen Zwischenschicht eingefügt wird, dass die Dünnschicht nicht benachbart zur zweiten thermoplastischen Zwischenschicht angeordnet ist;
e) der Schichtenstapel zwischen einer ersten Scheibe und einer zweiten Scheibe angeordnet wird
f) die erste Scheibe und die zweite Scheibe über den Schichtenstapel durch Lamination verbunden werden;
wobei
das Funktionselement eine Dicke von ≥ 50 µm aufweist und die dritte thermoplastische Zwischenschicht eine Dicke aufweist, die im Wesentlichen der Dicke des Funktionselements entspricht,
und die Abmessungen der Aussparung im Wesentlichen den Abmessungen des Funktionselements entsprechen.

Es versteht sich, dass die Schritte a) bis f) des Verfahrens in der angegebenen Reihenfolge durchgeführt werden.

Erfindungsgemäß ist ebenfalls ein Verfahren, wobei zumindest
a) eine erste thermoplastische Zwischenschicht, eine zweite thermoplastische Zwischenschicht und eine dritte thermoplastische Zwischenschicht vollflächig übereinander angeordnet werden;
b) die erste thermoplastische Zwischenschicht, die zweite thermoplastische Zwischenschicht und die dritte thermoplastische Zwischenschicht zu einem Vorverbund verbunden werden;
c) die dritte thermoplastische Zwischenschicht zur Bildung einer Aussparung, bereichsweise entfernt wird;
d) ein Schichtenstapel gebildet wird, indem ein Funktionselement, das eine Dünnschicht mit adhäsiven und/oder thermoplastischen Eigenschaften umfasst, die eine Oberfläche des Funktionselements bildet, derartig in die Aussparung in der dritten thermoplastischen Zwischenschicht eingefügt wird, dass die Dünnschicht nicht benachbart zur zweiten thermoplastischen Zwischenschicht angeordnet ist und eine Schicht mit adhäsiven und/oder thermoplastischen Eigenschaften vollflächig auf das Funktionselement und die dritte thermoplastische Zwischenschicht gelegt wird;
e) der Schichtenstapel zwischen einer ersten Scheibe und einer zweiten Scheibe angeordnet wird
f) die erste Scheibe und die zweite Scheibe über den Schichtenstapel durch Lamination verbunden werden;
wobei
das Funktionselement eine Dicke von ≥ 50 µm aufweist und die dritte thermoplastische Zwischenschicht eine Dicke aufweist, die im Wesentlichen der Dicke des Funktionselements entspricht,
und die Abmessungen der Aussparung im Wesentlichen den Abmessungen des Funktionselements entsprechen.

Es versteht sich, dass die Schritte a) bis f) des Verfahrens in der angegebenen Reihenfolge durchgeführt werden.

In einer bevorzugten Ausführungsform des erfindungsgemäßen Verfahrens weist die zweite thermoplastische Zwischenschicht eine Dicke von 20 µm bis 150 µm, bevorzugt von 30 µm bis 90 µm, besonders bevorzugt von 50 µm bis 75 µm und ganz besonders bevorzugt von 50 µm auf.

Das Funktionselement hat beispielsweise eine Dicke von 50 µm bis 1,0 mm. Bevorzugt kann das Funktionselement von 50 µm bis 300 µm, besonders bevorzugt von 50 µm bis 100 µm dick sein.

Das Funktionselement kann beispielsweise eine im Infrarotbereich, im sichtbaren Bereich und/oder im UV-Bereich reflektierende Folie oder eine im Infrarotbereich, im sichtbaren Bereich und/oder im UV-Bereich absorbierende Folie oder eine Folie mit Streuwirkung oder eine holographische HUD-Folie sein oder eine Folie solche umfassen. Das Funktionselement kann beispielsweise auch ein steuerbares Funktionselement, insbesondere ein PDLC-, ein SPD-, ein, LC- ein elektrochromes oder ein elektrolumineszentes Funktionselement, sein oder ein solches umfassen. Derartige Folien und derartige steuerbare Funktionselemente sind kommerziell erhältlich.

Bevorzugt handelt es sich bei dem Funktionselement um eine im Infrarotbereich, im sichtbaren Bereich und/oder im UV-Bereich reflektierende Folie oder eine im Infrarotbereich, im sichtbaren Bereich und/oder im UV-Bereich absorbierende Folie oder eine Folie mit Streuwirkung oder eine holographische HUD-Folie oder das Funktionselement umfasst eine solche Folie. Besonders bevorzugt handelt es sich bei dem Funktionselement um eine im Infrarotbereiche reflektierende Folie, d.h. eine sogenannte XIR-Folie, oder das Funktionselement umfasst eine solche Folie.

Die erwähnten im Infrarotbereich, im sichtbaren Bereich und/oder im UV-Bereich reflektierenden Folien oder im Infrarotbereich, im sichtbaren Bereich und/oder im UV-Bereich absorbierenden Folien oder Folien mit Streuwirkung oder holographischen HUD-Folien und deren Funktionsweise sind dem Fachmann an sich bekannt, so dass an dieser Stelle auf eine ausführliche Beschreibung verzichtet werden kann.

Wenn das Funktionselement eine im Infrarotbereich, im sichtbaren Bereich und/oder im UV-Bereich reflektierende Folie oder eine im Infrarotbereich, im sichtbaren Bereich und/oder im UV-Bereich absorbierende Folie oder eine Folie mit Streuwirkung oder eine holographische HUD-Folie ist oder eine solche Folie umfasst, so weist diese Folie bevorzugt eine Dicke von 50 µm bis 300 µm, insbesondere von 50 µm bis 100 µm, beispielsweise 50 µm oder 100 µm, auf.

Wenn das Funktionselement ein steuerbares Funktionselement ist oder eine solches umfasst, so weist dieses bevorzugt eine Dicke von 0,2 mm bis 1,0 mm, insbesondere von 0,3 mm bis 0,7 mm, beispielsweise 0,4 mm auf.

Bevorzugt enthalten die erste thermoplastische Zwischenschicht, die zweite thermoplastische Zwischenschicht und die dritte thermoplastische Zwischenschicht unabhängig voneinander ein thermoplastisches Polymer, besonders bevorzugt zumindest Polyvinylbutyral (PVB), Ethylenvinylacetat (EVA) und/oder Polyurethan (PU), ganz besonders bevorzugt Polyvinylbutyral (PVB).

In einer Ausführungsform des erfindungsgemäßen Verfahrens umfasst der Schichtenstapel eine vollflächig auf dem Funktionselement und der dritten thermoplastischen Zwischenschicht aufliegende Schicht mit adhäsiven und/oder thermoplastischen Eigenschaften und es enthält die Schicht mit adhäsiven und/oder thermoplastischen Eigenschaften bevorzugt ein thermoplastisches Polymer, bevorzugt zumindest Polyvinylbutyral (PVB), Ethylenvinylacetat (EVA) und/oder Polyurethan (PU), besonders bevorzugt Polyvinylbutyral (PVB). Optional kann die Schicht mit adhäsiven und/oder thermoplastischen Eigenschaften einen keilförmigen Querschnitt aufweisen. Der Keilwinkel einer keilförmigen Schicht mit adhäsiven und/oder thermoplastischen Eigenschaften beträgt bevorzugt 0,1 mrad bis 1,0 mrad, besonders bevorzugt 0,15 mrad bis 0,75 mrad, ganz besonders bevorzugt 0,3 mrad bis 0,7 mrad.

In einer alternativen Ausführungsform des erfindungsgemäßen Verfahrens umfasst der Schichtenstapel eine vollflächig auf dem Funktionselement und der dritten thermoplastischen Zwischenschicht aufliegende Schicht mit adhäsiven und/oder thermoplastischen Eigenschaften und die Schicht mit adhäsiven und/oder thermoplastischen Eigenschaften ist ein optisch transparenter Kleber, beispielsweise ein sogenannter optical clear adhesive (OCA)-Kleber.

In einer weiteren Ausführungsform des erfindungsgemäßen Verfahrens umfasst das Funktionselement eine Dünnschicht mit adhäsiven und/oder thermoplastischen Eigenschaften, die eine Oberfläche des Funktionselements bildet und das Funktionselement wird derartig in die Aussparung in der dritten thermoplastischen Zwischenschicht eingelegt, dass die Dünnschicht nicht direkt benachbart zur zweiten thermoplastischen Zwischenschicht angeordnet ist und die Dünnschicht mit adhäsiven und/oder thermoplastischen Eigenschaften enthält ein thermoplastisches Polymer, bevorzugt zumindest Polyvinylbutyral (PVB), Ethylenvinylacetat (EVA) und/oder Polyurethan (PU), besonders bevorzugt Polyvinylbutyral (PVB) und weist bevorzugt eine Dicke von maximal 50 µm auf.

In einer alternativen weiteren Ausführungsform des erfindungsgemäßen Verfahrens umfasst das Funktionselement eine Dünnschicht mit adhäsiven und/oder thermoplastischen Eigenschaften, die eine Oberfläche des Funktionselements bildet und das Funktionselement wird derartig in die Aussparung in der dritten thermoplastischen Zwischenschicht eingelegt, dass die Dünnschicht nicht direkt benachbart zur zweiten thermoplastischen Zwischenschicht angeordnet ist und die Dünnschicht mit adhäsiven und/oder thermoplastischen Eigenschaften ist ein optisch transparenter Kleber, beispielsweise ein sogenannter optical clear adhesive (OCA)-Kleber und weist bevorzugt eine Dicke von maximal 50 µm auf.

Die erste thermoplastische Zwischenschicht kann beispielsweise durch eine einzige thermoplastische Folie ausgebildet sein. Die erste thermoplastische Zwischenschicht kann auch als zweilagiger, dreilagiger oder mehrlagiger Folienstapel ausgebildet sein und somit aus zwei, drei oder mehr thermoplastischen Schichten bestehen. Die erste thermoplastische Zwischenschicht kann auch als eine Zwischenschicht mit akustisch dämpfenden Eigenschaften ausgebildet sein.

Die erste thermoplastische Zwischenschicht weist bevorzugt eine konstante Dicke auf. In einer Ausführungsform weist die erste thermoplastische Zwischenschicht einen keilförmigen Querschnitt auf. Der Keilwinkel einer keilförmigen ersten thermoplastischen Zwischenschicht beträgt bevorzugt 0,1 mrad bis 1,0 mrad, besonders bevorzugt 0,15 mrad bis 0,75 mrad, ganz besonders bevorzugt 0,3 mrad bis 0,7 mrad.

Die zweite thermoplastische Zwischenschicht kann beispielsweise durch eine einzige thermoplastische Folie ausgebildet werden. Die zweite thermoplastische Zwischenschicht kann auch als zweilagiger, dreilagiger oder mehrlagiger Folienstapel ausgebildet sein und somit aus zwei, drei oder mehr thermoplastischen Schichten bestehen.

Die dritte thermoplastische Zwischenschicht kann beispielsweise durch eine einzige thermoplastische Folie ausgebildet werden. Die dritte thermoplastische Zwischenschicht kann auch als zweilagiger, dreilagiger oder mehrlagiger Folienstapel ausgebildet sein und somit aus zwei, drei oder mehr thermoplastischen Schichten bestehen.

In einer Ausführungsform besteht die dritte thermoplastische Zwischenschicht aus mindestens zwei thermoplastischen Schichten. In einer weiteren Ausführungsform besteht die dritte thermoplastische Zwischenschicht aus genau zwei thermoplastischen Schichten. Es versteht sich, dass die dritte thermoplastische Zwischenschicht auch nur aus einer einzelnen thermoplastischen Schicht bestehen kann.

In einer Ausgestaltung eines erfindungsgemäßen Verfahrens enthält die erste thermoplastische Zwischenschicht mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers. Der Weichmacher enthält oder besteht bevorzugt aus Triethylenglykol-bis-(2-ethylhexanoat).

Weichmacher sind dabei Chemikalien, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Weitere bevorzugt Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH(CH₂CH₃)CO(OCH₂CH₂)₃O₂CCH(CH₂CH₃)C₄H₉.

In einer bevorzugten Ausführungsform eines erfindungsgemäßen Verfahrens enthält die erste thermoplastische Zwischenschicht Weichmacher und die zweite thermoplastische Zwischenschicht und die dritte thermoplastische Zwischenschicht enthalten unabhängig voneinander einen geringeren Anteil an Weichmachern als die erste thermoplastische Zwischenschicht oder sind frei von Weichmachern. Auf diese Weise ist das bereichsweise Entfernen der dritten thermoplastischen Zwischenschicht zur Bildung einer Aussparung vereinfacht, da die Haftung der dritten thermoplastischen Zwischenschicht an der zweiten thermoplastischen Zwischenschicht auf diese Weise geringer ist als die Haftung der zweiten thermoplastischen Zwischenschicht an der ersten thermoplastischen Zwischenschicht.

In einer weiteren bevorzugten Ausführungsform eines erfindungsgemäßen Verfahrens enthält die erste thermoplastische Zwischenschicht Weichmacher, die dritte thermoplastische Zwischenschicht besteht aus mindestens zwei thermoplastischen Schichten und die zweite thermoplastische Zwischenschicht und die thermoplastische Schicht der dritten thermoplastischen Zwischenschicht, die in der Verbundscheibe direkt benachbart zur zweiten thermoplastischen Zwischenschicht angeordnet ist, enthalten unabhängig voneinander einen geringeren Anteil an Weichmachern als die erste thermoplastische Zwischenschicht oder sind frei von Weichmachern. Auf diese Weise ist das bereichsweise Entfernen der dritten thermoplastischen Zwischenschicht zur Bildung einer Aussparung vereinfacht, da die Haftung derjenigen thermoplastische Schicht der dritten thermoplastischen Zwischenschicht, die direkt benachbart zur zweiten thermoplastischen Schicht angeordnet ist, an der zweiten thermoplastischen Zwischenschicht auf diese Weise geringer ist als die Haftung der zweiten thermoplastischen Zwischenschicht an der ersten thermoplastischen Zwischenschicht.

Eine mittels des erfindungsgemäßen Verfahrens hergestellte erfindungsgemäße Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes sein.

Eine nach einem erfindungsgemäßen Verfahren hergestellte Verbundscheibe kann in einer oder in mehreren Richtungen des Raumes gebogen sein, wie es für Kraftfahrzeugscheiben üblich ist, wobei typische Krümmungsradien im Bereich von etwa 10 cm bis etwa 40 m liegen. In diesem Fall werden als erste Scheibe und zweite Scheibe entsprechend gebogene Scheiben in dem erfindungsgemäßen Verfahren eingesetzt. Die Verbundscheibe kann aber auch plan sein, beispielsweise wenn es als Scheibe für Busse, Züge oder Traktoren vorgesehen ist.

Die Begriffe erste Scheibe und zweite Scheibe beschreiben willkürlich zwei verschiedene Scheiben. Insbesondere kann die erste Scheibe eine Außenscheibe und die zweite Scheibe eine Innenscheibe sein oder alternativ die erste Scheibe eine Innenscheibe und die zweite Scheibe eine Außenscheibe sein.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe bezeichnet. Mit Außenscheibe wird die der äußeren Umgebung zugewandte Scheibe bezeichnet. Die Erfindung ist aber darauf nicht eingeschränkt.

Die erste thermoplastische Zwischenschicht, die zweite thermoplastische Zwischenschicht und die dritte thermoplastische Zwischenschicht weisen üblicherweise dieselben äußeren Abmessungen wie die erste Scheibe und die zweite Scheibe auf.

In einer bevorzugten Ausführungsform des Verfahrens ist das Funktionselement eine im Infrarotbereich reflektierende Folie, d.h. eine XIR-Folie, oder umfasst eine solche. Dabei handelt sich um eine Trägerfolie mit einer darauf angeordneten Infrarotlicht reflektierenden Beschichtung.

Eine solche Trägerfolie enthält bevorzugt Polyethylenterephthalat (PET), Polyethylen (PE), Polyamid (PA), Polymethylmethacrylat (PMMA) und/oder Gemische und/oder Copolymere und/oder Derivate davon. Besonders bevorzugt handelt es sich bei der Trägerfolie um eine PET-Folie. Die Trägerfolie kann auch Celluloseacetat, auch als Triacetat bezeichnet, enthalten. Eine solche Celluloseacetat enthaltene Folie wird auch als TAC-Film bezeichnet. Die Trägerfolie weist bevorzugt eine Dicke von 5 µm (Mikrometer), bis 500 µm, besonders bevorzugt 10 µm bis 200 µm, beispielsweise 50 µm oder 75 µm oder 100 µm auf. Die Dicke der Infrarotstrahlung reflektierenden Beschichtung beträgt maximal 1 µm, bevorzugt deutlich weniger.

In einer weiteren Ausführungsform handelt es sich bei dem Funktionselement um eine Folie mit Streuwirkung oder das Funktionselement umfasst eine Folie mit Streuwirkung. Dabei handelt sich um eine Trägerfolie mit auf der Oberfläche angeordneten Flüssigkristallen.

Eine solche Trägerfolie enthält bevorzugt Polyethylenterephthalat (PET), Polyethylen (PE), Polyamid (PA), Polymethylmethacrylat (PMMA) und/oder Gemische und/oder Copolymere und/oder Derivate davon. Besonders bevorzugt handelt es sich bei der Trägerfolie um eine PET-Folie. Die Trägerfolie kann auch Celluloseacetat, auch als Triacetat bezeichnet, enthalten. Eine solche Celluloseacetat enthaltene Folie wird auch als TAC-Film bezeichnet. Die Trägerfolie weist bevorzugt eine Dicke von 5 µm (Mikrometer), bis 500 µm, besonders bevorzugt 10 µm bis 200 µm, beispielsweise 50 µm oder 75 µm oder 100 µm auf.

In einer weiteren Ausführungsform des Verfahrens ist das Funktionselement ein steuerbares Funktionselement oder umfasst ein solches. Ein steuerbares Funktionselement umfasst typischerweise eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der ersten Scheibe und der zweiten Scheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und/oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm (Mikrometer), ganz besonders bevorzugt von 30 nm bis 500 nm.

Ein steuerbares Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Ein steuerbares Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das steuerbare Funktionselement kann dadurch als laminierte Folie bereitgestellt werden, die vorteilhaft verarbeitet werden kann. Das steuerbare Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Die Trägerfolie trägt insbesondere die Flächenelektroden und gibt einer flüssigen oder weichen aktiven Schicht die nötige mechanische Stabilität.

Die Trägerfolien enthalten bevorzugt zumindest ein thermoplastisches Polymer, besonders bevorzugt Weichmacher-armes oder Weichmacher-freies Polyethylenterephthalat (PET). Das ist besonders vorteilhaft im Hinblick auf die Stabilität der Mehrschichtfolie. Die Trägerfolien können aber auch andere Weichmacher-arme oder Weichmacher-freie Polymere enthalten oder daraus bestehen, beispielsweise Ethylenvinylacetat (EVA), Polypropylen, Polycarbonat, Polymethylmetacrylat, Polyacrylat, Polyvinylchlorid, Polyacetatharz, Gießharze, Acrylate, fluorinierte Ethylen-Propylene, Polyvinylfluorid und/oder Ethylen-Tetrafluorethylen. Die Dicke jeder Trägerfolie beträgt bevorzugt von 0,1 mm bis 1 mm, besonders bevorzugt von 0,1 mm bis 0,2 mm.

Typischerweise weisen die Trägerfolien jeweils eine elektrisch leitfähige Beschichtung auf, die der aktiven Schicht zugewandt ist und als Flächenelektrode fungiert.

In einer weiteren vorteilhaften Ausgestaltung des erfindungsgemäßen Verfahrens ist das Funktionselement ein PDLC-Funktionselement (*polymer dispersed liquid crystal*) oder umfasst ein solches. Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Grundsätzlich ist es aber auch möglich, andere Arten von steuerbaren Funktionselementen einzusetzen, beispielweise elektrochrome oder elektrolumineszente Funktionselemente oder LC-Funktionselemente (*liquid crystal*) oder Guest-Host-Systeme oder SPD-Funktionselemente (*suspended particle device*)*.* Die erwähnten steuerbaren Funktionselemente und deren Funktionsweise sind dem Fachmann an sich bekannt, so dass an dieser Stelle auf eine ausführliche Beschreibung verzichtet werden kann.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer Ausführung erfolgt das Ausschneiden mittels eines Plotters, der mit einer Schneidklinge bestückt ist. In einer weiteren Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass sich das Material gleichsam zurückzieht, was optisch auffällig ist und die Ästhetik der Scheibe nachteilig beeinflusst.

Die erste Scheibe und die zweite Scheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein, oder auch getönt oder gefärbt.

Die erste Scheibe und die zweite Scheibe können geeignete, an sich bekannte Beschichtungen aufweisen, beispielsweise Antireflexbeschichtungen, Antihaftbeschichtungen, Antikratzbeschichtungen, photokatalytische Beschichtungen, elektrisch beheizbare Beschichtungen, Sonnenschutzbeschichtungen und/oder die Emission langwelliger Wärmestrahlung mindernde Beschichtungen (Low-E-Beschichtungen). Bevorzugt sind die Antireflexbeschichtungen, Antikratzbeschichtungen und/oder Low-E-Beschichtungen an der Außenseite der ersten Scheibe oder an der Außenseite der zweiten Scheibe angebracht. Mit der Außenseite der ersten Scheibe und der Außenseite der zweiten Scheibe ist jeweils diejenige Seite der Scheibe gemeint, die nicht in Richtung des Funktionselements zeigt. Mit Innenseite der ersten Scheibe und der Innenseite der zweiten Scheibe ist jeweils diejenige Seite der Scheibe gemeint, die in Richtung des Funktionselements zeigt.

Die Dicke der ersten Scheibe und der zweiten Scheibe kann breit variieren und so den Erfordernissen im Einzelfall angepasst werden. Die erste Scheibe und die zweite Scheibe weisen bevorzugt Dicken von 0,5 mm bis 5 mm auf, besonders bevorzugt von 0,7 mm bis 2,5 mm.

Die thermoplastischen Zwischenschichten können klar sein, oder auch bereichsweise oder vollflächig getönt oder gefärbt sein.

Die Seitenkanten des Funktionselements werden in Durchsicht durch die Verbundscheibe bevorzugt von einem opaken Abdeckdruck auf der ersten Scheibe und/oder der zweiten Scheibe und/oder durch einen äußeren Rahmen verdeckt. Dachscheiben und Windschutzscheiben weisen typischerweise einen umlaufenden peripheren Abdeckdruck aus einer opaken Emaille auf, der insbesondere dazu dient, den zum Einbau der Windschutzscheibe verwendeten Kleber vor UV-Strahlung zu schützen und optisch zu verdecken. Dieser periphere Abdeckdruck wird bevorzugt dazu verwendet, auch die Seitenkanten des Funktionselements zu verdecken, sowie die erforderlichen elektrischen Anschlüsse, wenn die Verbundscheibe ein steuerbares Funktionselement aufweist. Bevorzugt weisen sowohl die erste Scheibe als auch die zweite Scheibe einen Abdeckdruck auf, so dass die Durchsicht von beiden Seiten gehindert wird.

Das Funktionselement kann mindestens eine Aussparung aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein steuerbares Funktionselement im Strahlengang beeinträchtigt werden würde, beispielsweise Regensensoren.

Das Funktionselement ist bevorzugt über die gesamte Breite der Verbundscheibe angeordnet, abzüglich eines beidseitigen Randbereichs mit einer Breite von beispielsweise 2 mm bis 20 mm. Auch zur Oberkante und Unterkante der Verbundscheibe weist das Funktionselement einen Abstand auf, bevorzugt beispielsweise einen Abstand von 2 mm bis 20 mm. Besonders bevorzugt nimmt das Funktionselement eine Größe von 70 % bis 90 %, ganz besonders bevorzugt 80 % der Größe der Verbundscheibe ein. Es ist aber auch möglich, dass das Funktionselement nur in einem kleinen Teilbereich der Verbundscheibe angeordnet ist, beispielsweise nur eine Größe von 5 % bis 50 %, bevorzugt 5 % bis 10 % der Größe der Verbundscheibe einnimmt.

Zur elektrischen Kontaktierung eines steuerbaren Funktionselements werden elektrische Kabel, insbesondere Flachleiter, mit den Flächenelektroden verbunden und über die Seitenkante aus dem Schichtstapel herausgeführt. Der Anschluss der Kabel erfolgt natürlich vor dem Laminieren der Scheibe. Die Kabel werden bevorzugt zwischen zwei Zwischenschichten ausgeführt, um eine vollständige Umschließung der Flachleiter zu erhalten. Auf diese Weise wird das Eindringen von Feuchtigkeit vermieden.

Eventuell vorhandene Drucke, beispielsweise opake Abdeckdrucke oder aufgedruckte Sammelleiter zur elektrischen Kontaktierung eines steuerbaren Funktionselements werden bevorzugt im Siebdruckverfahren aufgebracht.

Das Verbinden der ersten thermoplastischen Zwischenschicht, der zweiten thermoplastischen Zwischenschicht und der dritten thermoplastischen Zwischenschicht zu einem Vorverbund kann durch Entlüften in einem Vakuumsack unter Temperatureinwirkung erfolgen. Beispielsweise kann dies bei einer Temperatur von 50°C bis 100°C, bevorzugt 80°C bis 100 °C, und einem Vakuum von 900 mbar über einen Zeitraum von 10 bis 30 Minuten erfolgen. Alternativ kann das Verbinden auch durch das Leiten über beheizte Rollen mit anschließendem Pressen in einer Rollenpresse erfolgen, beispielsweise bei einem Rollendruck von 1 bis 4 bar und einer Temperatur von 200 °C bis 300 °C.

Das bereichsweise Entfernen der dritten thermoplastischen Zwischenschicht erfolgt, indem entlang der äußeren Abmessungen der für das einzufügende Funktionselement notwendigen Aussparung die dritte thermoplastische Zwischenschicht durchgeschnitten wird. Das Schneiden kann beispielsweise mittels eines Messers, eines Plotters, eines Lasers oder durch Ausstanzen erfolgen. Anschließend wird dann der Bereich, um den herum ausgeschnitten wurde, entfernt. Dies kann manuell oder auch maschinell erfolgen.

Das Laminieren der Verbundscheibe erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Vorteil des erfindungsgemäßen Verfahrens ist, dass dadurch, dass die Aussparung in der dritten thermoplastischen Zwischenschicht erst dann gebildet wird, wenn die dritte thermoplastische Zwischenschicht mit der ersten und der zweiten thermoplastischen Zwischenschicht zu einem Vorverbund verbunden wurde, ein Verrutschen der dritten Zwischenschicht, die die Aussparung aufweist, verhindert wird und eine exakte Positionierung der Aussparung und somit auch des Funktionselements gewährleistet wird.

Die Erfindung betrifft auch eine Verbundscheibe, insbesondere in Form einer Windschutzscheibe, hergestellt nach einem erfindungsgemäßen Verfahren.

Es versteht sich, dass hinsichtlich Aufbau, Abmessungen, Materialien und bevorzugten Ausgestaltungen der ersten Scheibe, der zweiten Scheibe, der Zwischenschichten, der Schichten und des Funktionselements die oben für das erfindungsgemäße Verfahren getroffenen Aussagen gleichermaßen für die erfindungsgemäße Verbundscheibe gelten.

Die Erfindung betrifft auch die Verwendung einer erfindungsgemäßen Verbundscheibe, d.h. einer Verbundscheibe, die nach einem erfindungsgemäßen Verfahren hergestellt wurde, als Innenverglasung oder Außenverglasung in einem Fahrzeug, einem Gebäude, bevorzugt als Fahrzeugscheibe, besonders bevorzugt als Windschutzscheibe, Dachscheibe, Seitenscheibe oder Heckscheibe, ganz besonders bevorzugt als Windschutzscheibe oder Dachscheibe.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Fig. 1: einen Querschnitt durch eine Ausführungsform eines Vorverbunds zur Herstellung einer Verbundscheibe mittels eines erfindungsgemäßen Verfahrens,
- Fig. 2: einen Querschnitt durch eine Ausführungsform eines Vorverbunds zur Herstellung einer Verbundscheibe mittels eines erfindungsgemäßen Verfahrens,
- Fig. 3: einen Querschnitt durch eine Ausführungsform eines Vorverbunds mit einer Aussparung zur Herstellung einer Verbundscheibe mittels eines erfindungsgemäßen Verfahrens,
- Fig. 4: einen Querschnitt durch eine Ausführungsform eines Schichtenstapels zur Herstellung einer Verbundscheibe mittels eines erfindungsgemäßen Verfahrens,
- Fig. 5: einen Querschnitt durch eine Ausführungsform einer mittels eines erfindungsgemäßen Verfahrens hergestellte Verbundscheibe,
- Fig. 6: einen Querschnitt durch eine weitere Ausführungsform einer mittels eines erfindungsgemäßen Verfahrens hergestellte Verbundscheibe,
- Fig. 7: eine vergrößerte Darstellung des Bereichs Z aus der Fig. 6,
- Fig. 8: einen Querschnitt durch eine weitere Ausführungsform einer mittels eines erfindungsgemäßen Verfahrens hergestellte Verbundscheibe,
- Fig. 9: einen Querschnitt durch eine Ausführungsform eines Vorverbunds zur Herstellung einer Verbundscheibe mittels eines erfindungsgemäßen Verfahrens,
- Fig. 10: einen Querschnitt durch eine Ausführungsform eines Vorverbunds zur Herstellung einer Verbundscheibe mittels eines erfindungsgemäßen Verfahrens,
- Fig. 11: einen Querschnitt durch eine Ausführungsform eines Vorverbunds mit einer Aussparung zur Herstellung einer Verbundscheibe mittels eines erfindungsgemäßen Verfahrens,
- Fig. 12: einen Querschnitt durch eine weitere Ausführungsform eines Schichtenstapels zur Herstellung einer Verbundscheibe mittels eines erfindungsgemäßen Verfahrens,
- Fig. 13: einen Querschnitt durch eine Ausführungsform einer mittels eines erfindungsgemäßen Verfahrens hergestellte Verbundscheibe,
- Fig. 14: Draufsicht auf eine Ausführungsform einer mittels eines erfindungsgemäßen Verfahrens hergestellte Verbundscheibe,
- Fig. 15: Draufsicht auf eine weitere Ausführungsform einer mittels eines erfindungsgemäßen Verfahrens hergestellte Verbundscheibe, und
- Fig. 16: einen Querschnitt durch die in Fig. 15 dargestellte Verbundscheibe.

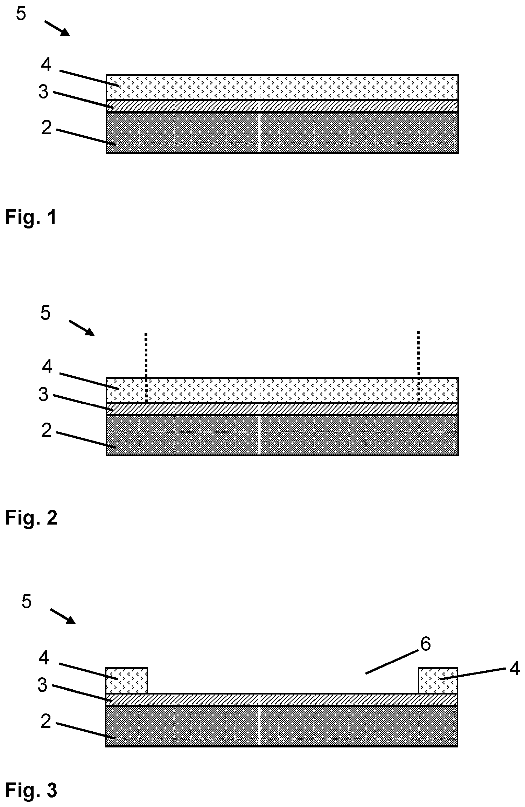

Fig. 1 zeigt einen Querschnitt durch eine Ausführungsform eines Vorverbunds 5 zur Herstellung einer Verbundscheibe 1 mittels eines erfindungsgemäßen Verfahrens. Der in der Fig. 1 gezeigte Vorverbund 5 umfasst eine erste thermoplastische Zwischenschicht 2, eine zweite thermoplastische Zwischenschicht 3 und eine dritte thermoplastische Zwischenschicht 4, wobei die zweite thermoplastische Zwischenschicht 3 zwischen der ersten thermoplastischen Zwischenschicht 2 und der dritten thermoplastischen Zwischenschicht 4 angeordnet ist. Beispielsweise ist die erste thermoplastische Zwischenschicht 2 eine PVB-Schicht mit einer Dicke von 0,76 mm und einem Weichmacheranteil von 40 %, die zweite thermoplastische Zwischenschicht 3 eine PVB-Schicht mit einer Dicke von 50 µm, die frei von Weichmachern ist, und die dritte thermoplastische Zwischenschicht 4 eine PVB-Schicht mit einer Dicke von 100 µm, die frei von Weichmachern ist. Der in der Fig. 1 im Querschnitt gezeigte Vorverbund 5 wurde beispielsweise erhalten, in dem eine erste thermoplastische Zwischenschicht 2, eine zweite thermoplastische Zwischenschicht 3 und eine dritte thermoplastische Zwischenschicht 4 übereinandergelegt wurden und anschließend in einem Vakuumsack bei 900 mbar und 90 °C für 20 Minuten bei Unterdruck erhitzt wurden.

Fig. 2 zeigt einen Querschnitt durch eine Ausführungsform eines Vorverbunds 5 zur Herstellung einer Verbundscheibe 1 mittels eines erfindungsgemäßen Verfahrens. Der in der Fig. 2 im Querschnitt gezeigte Vorverbund 5 unterscheidet sich von dem in der Fig. 1 gezeigten nur dahingehend, dass mittels zweier gepunkteter Linien eingezeichnet ist, wo bei dem erfindungsgemäßen Verfahren die Schnitte zur Bildung einer Aussparung in der dritten thermoplastischen Zwischenschicht 4 vorgenommen werden.

Fig. 3 zeigt einen Querschnitt durch eine Ausführungsform eines Vorverbunds 5 mit einer Aussparung 6. Der in der Fig. 3 im Querschnitt gezeigte Vorverbund 5 unterscheidet sich von dem in der Fig. 2 gezeigten nur dahingehend, dass dieser eine Aussparung 6 aufweist, die durch Entfernen der dritten thermoplastischen Zwischenschicht 4 in den zwischen den Schnitten liegenden Bereichen gebildet wurde.

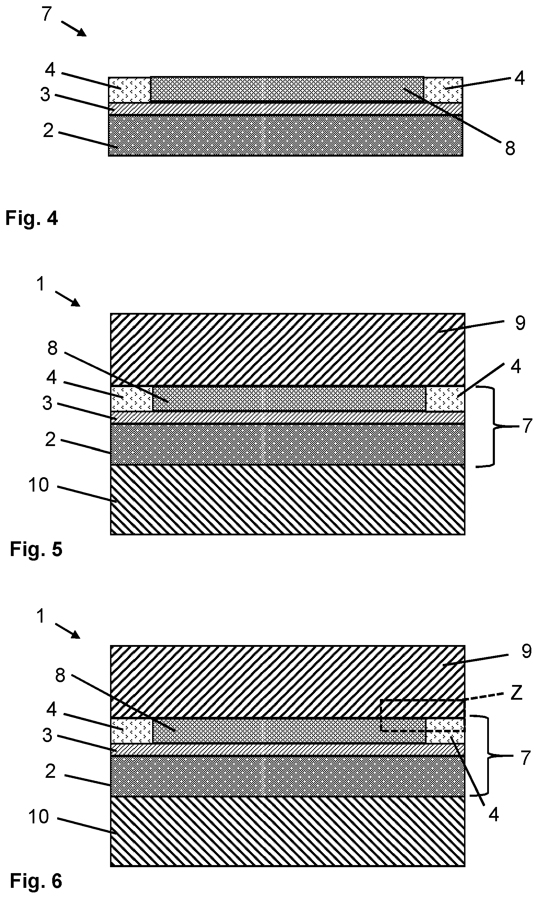

Fig. 4 zeigt einen Querschnitt durch eine Ausführungsform eines Schichtenstapels 7 zur Herstellung einer Verbundscheibe 1 mittels eines erfindungsgemäßen Verfahrens. Der in der Fig. 4 im Querschnitt gezeigte Schichtenstapel 7 umfasst den in der Fig. 3 gezeigten Vorverbund 5, wobei in der Aussparung 6 in der dritten thermoplastischen Zwischenschicht ein Funktionselement 8 angeordnet ist. In der in der Fig. 4 gezeigten Ausführungsform ist das Funktionselement beispielsweise eine XIR-Folie mit einer Dicke von 100 µm. Diese umfasst eine PET-Trägerfolie mit einer Infrarotstrahlung reflektierenden Beschichtung. Das als XIR-Folie ausgebildete Funktionselement 8 ist beispielsweise so in der Aussparung 6 angeordnet, dass die Infrarotstrahlung reflektierende Beschichtung direkt benachbart zur zweiten thermoplastischen Schicht 3 angeordnet ist. Auf diese Weise ist die Beschichtung vor Beschädigungen geschützt.

Fig. 5 zeigt einen Querschnitt durch eine Ausführungsform einer mittels eines erfindungsgemäßen Verfahrens hergestellten Verbundscheibe 1. Die in der Fig. 5 im Querschnitt gezeigte Verbundscheibe 1 umfasst den in der Fig. 4 gezeigten Schichtenstapel 7 und eine erste Scheibe 9 und eine zweite Scheibe 10, wobei der Schichtenstapel 7 zwischen der ersten Scheibe 9 und der zweiten Scheibe 10 angeordnet ist. Die erste Scheibe 9 und die zweite Scheibe 10 bestehen beispielsweise aus Kalk-Natron-Glas und weisen beispielsweise jeweils eine Dicke von 2,1 mm auf.

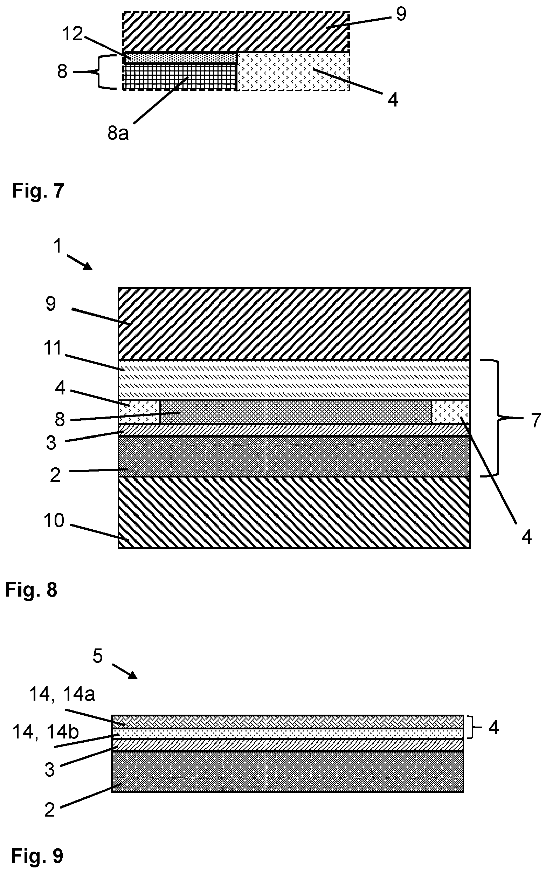

Fig. 6 zeigt einen Querschnitt durch eine weitere Ausführungsform einer mittels eines erfindungsgemäßen Verfahrens hergestellten Verbundscheibe 1 und in der Fig. 7 ist der Bereich Z der Fig. 6 vergrößert dargestellt. Die in der Fig. 6 im Querschnitt gezeigte Verbundscheibe 1 unterscheidet sich von der in der Fig. 5 im Querschnitt gezeigten dahingehend, dass das Funktionselement 8 eine Dünnschicht 12 mit adhäsiven und/oder thermoplastischen Eigenschaften aufweist, die beispielweise als eine 20 µm dicke PVB-Folie mit einem Weichmacheranteil von 30 % ausgebildet ist. Das Funktionselement ohne Dünnschicht 8a ist beispielsweise 80 µm dick, so dass das Funktionselement 8 eine Gesamtdicke von 100 µm aufweist. Das Funktionselement 8 in der Fig. 6 gezeigten Ausführungsform einer Verbundscheibe 1 umfasst somit eine XIR-Folie mit einer Dicke von 80 µm (in der Fig. 7 mit dem Bezugszeichen 8a versehen) und eine als eine 20 µm dicke PVB-Folie mit einem Weichmacheranteil von 30 % ausgebildete Dünnschicht 12. Das Funktionselement 8 ist in der Aussparung in der dritten thermoplastischen Zwischenschicht 4 derartig angeordnet, dass die Dünnschicht 12 mit adhäsiven und/oder thermoplastischen Eigenschaften in der Verbundscheibe 1 nicht direkt benachbart zur zweiten thermoplastischen Zwischenschicht 3, sondern direkt benachbart zur ersten Scheibe 9 angeordnet ist.

Fig. 8 zeigt einen Querschnitt durch eine weitere Ausführungsform einer mittels eines erfindungsgemäßen Verfahrens hergestellten Verbundscheibe 1. Die in der Fig. 8 gezeigte Ausführungsform einer Verbundscheibe 1 unterscheidet sich von der in der Fig. 5 im Querschnitt gezeigten Ausführungsform einer Verbundscheibe nur dahingehend, dass die Stapelfolge 7 zusätzlich eine Schicht 11 mit adhäsiven und/oder thermoplastischen Eigenschaften aufweist, die vollflächig direkt benachbart zur dritten thermoplastischen Zwischenschicht 4 und dem Funktionselement 8 und direkt benachbart zur ersten Scheibe 9 angeordnet ist. Die Schicht 11 mit adhäsiven und/oder thermoplastischen Eigenschaften ist beispielsweise eine PVB-Schicht mit einer Dicke von 0,76 mm und einem Weichmacheranteil von 40 %.

Fig. 9 zeigt einen Querschnitt durch eine weitere Ausführungsform eines Vorverbunds 5 zur Herstellung einer Verbundscheibe 1 mittels eines erfindungsgemäßen Verfahrens. Der in der Fig. 9 gezeigte Vorverbund 5 umfasst eine erste thermoplastische Zwischenschicht 2, eine zweite thermoplastische Zwischenschicht 3 und eine dritte thermoplastische Zwischenschicht 4, wobei die zweite thermoplastische Zwischenschicht 3 zwischen der ersten thermoplastischen Zwischenschicht 2 und der dritten thermoplastischen Zwischenschicht 4 angeordnet ist. Beispielsweise ist die erste thermoplastische Zwischenschicht 2 eine PVB-Schicht mit einer Dicke von 0,76 mm und einem Weichmacheranteil von 40 %, die zweite thermoplastische Zwischenschicht 3 eine PVB-Schicht mit einer Dicke von 50 µm, die frei von Weichmachern ist, und die dritte thermoplastische Zwischenschicht 4 umfasst zwei thermoplastische Schichten 14, d.h. eine erste thermoplastische Schicht 14a und eine zweite thermoplastische Schicht 14b, wobei die erste thermoplastische Schicht 14a direkt benachbart zur zweiten thermoplastischen Zwischenschicht 3 angeordnet ist. Die erste thermoplastische Schicht 14a ist beispielsweise eine PVB-Schicht mit einer Dicke von 75 µm, die frei von Weichmachern ist und die zweite thermoplastische Schicht 14b eine PVB-Schicht mit einer Dicke von 75 µm, die einen Weichmacheranteil von 20 % aufweist. Der in der Fig. 9 im Querschnitt gezeigte Vorverbund 5 wurde beispielsweise erhalten, in dem eine erste thermoplastische Zwischenschicht 2, eine zweite thermoplastische Zwischenschicht 3 und eine dritte thermoplastische Zwischenschicht 4 übereinandergelegt wurden und anschließend in einem Vakuumsack bei 900 mbar und 80 °C für 10 Minuten bei Unterdruck erhitzt wurden.

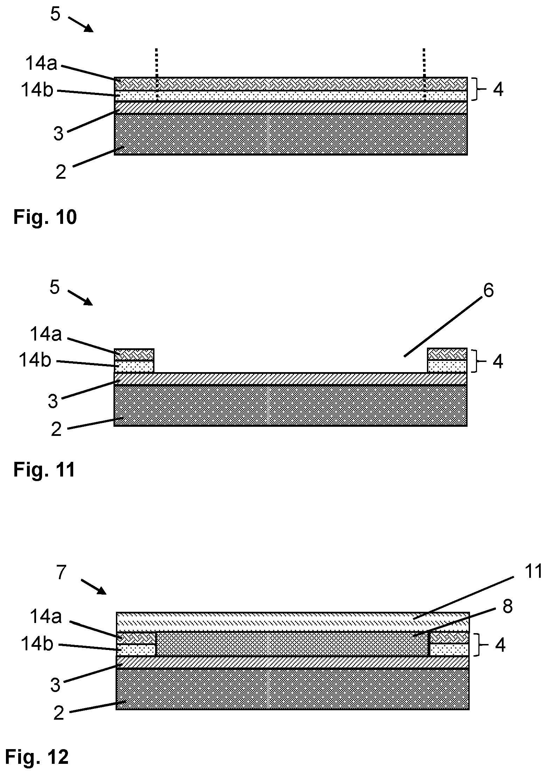

Fig. 10 zeigt einen Querschnitt durch eine Ausführungsform eines Vorverbunds 5 zur Herstellung einer Verbundscheibe 1 mittels eines erfindungsgemäßen Verfahrens. Der in der Fig. 10 im Querschnitt gezeigte Vorverbund 5 unterscheidet sich von dem in der Fig. 9 gezeigten nur dahingehend, dass mittels zweier gepunkteter Linien eingezeichnet ist, wo bei dem erfindungsgemäßen Verfahren die Schnitte zur Bildung einer Aussparung in der dritten thermoplastischen Zwischenschicht 4 vorgenommen werden.

Fig. 11 zeigt einen Querschnitt durch eine Ausführungsform eines Vorverbunds 5 mit einer Aussparung 6. Der in der Fig. 11 im Querschnitt gezeigte Vorverbund 5 unterscheidet sich von dem in der Fig. 10 gezeigten nur dahingehend, dass dieser eine Aussparung 6 aufweist, die durch Entfernen der dritten thermoplastischen Zwischenschicht 4 in den zwischen den Schnitten liegenden Bereichen gebildet wurde.

Fig. 12 zeigt einen Querschnitt durch eine Ausführungsform eines Schichtenstapels 7 zur Herstellung einer Verbundscheibe 1 mittels eines erfindungsgemäßen Verfahrens. Der in der Fig. 12 im Querschnitt gezeigte Schichtenstapel 7 umfasst den in der Fig. 11 gezeigten Vorverbund 5, wobei in der Aussparung 6 in der dritten thermoplastischen Zwischenschicht ein Funktionselement 8 angeordnet ist und auf der dritten thermoplastischen Zwischenschicht 4 und dem Funktionselement 8 eine Schicht 11 mit adhäsiven und/oder thermoplastischen Eigenschaften vollflächig angeordnet ist. Bei der Schicht 11 mit adhäsiven und/oder thermoplastischen Eigenschaften handelt es sich beispielsweise um eine 0,38 mm dicke PVB-Folie mit einem Weichmacheranteil von 30 %. In der in der Fig. 12 gezeigten Ausführungsform ist das Funktionselement beispielsweise eine Folie mit Streuwirkung in Form einer PET-Trägerfolie mit einer Dicke von 150 µm mit auf der Oberfläche angeordneten Flüssigkristallen.

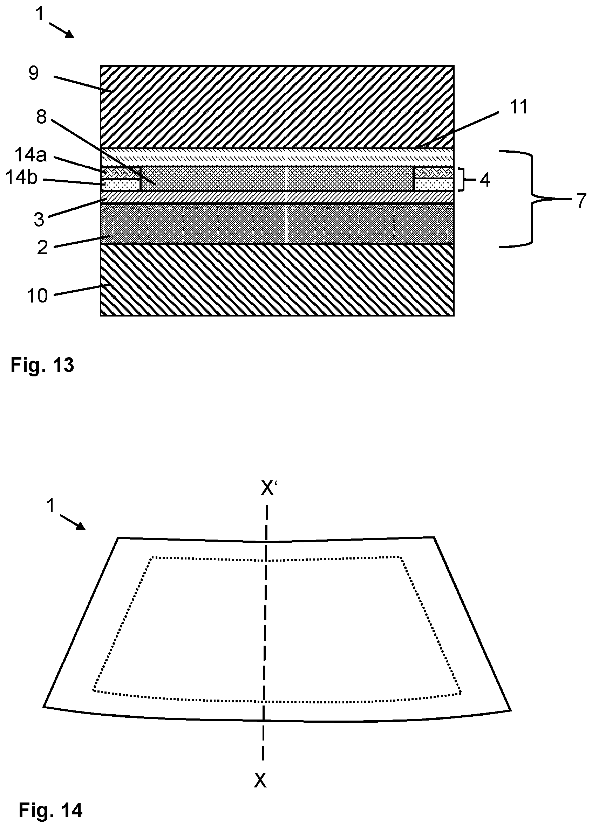

Fig. 13 zeigt einen Querschnitt durch eine Ausführungsform einer mittels eines erfindungsgemäßen Verfahrens hergestellten Verbundscheibe 1. Die in der Fig. 13 im Querschnitt gezeigte Verbundscheibe 1 umfasst den in der Fig. 12 gezeigten Schichtenstapel 7 und eine erste Scheibe 9 und eine zweite Scheibe 10, wobei der Schichtenstapel 7 zwischen der ersten Scheibe 9 und der zweiten Scheibe 10 angeordnet ist. Die erste Scheibe 9 und die zweite Scheibe 10 bestehen beispielsweise aus Kalk-Natron-Glas und weisen beispielsweise jeweils eine Dicke von 2,1 mm auf.

Fig. 14 zeigt eine Draufsicht auf eine Ausführungsform einer mittels eines erfindungsgemäßen Verfahrens hergestellten Verbundscheibe 1 in Form einer Windschutzscheibe. Dabei handelt es sich beispielsweise um eine Verbundscheibe 1 wie in der Fig. 6 oder 8 im Querschnitt entlang der Linie X'-X dargestellt. Die gestrichelte Linie zeigt in der Fig. 14 den äußeren Umriss des Funktionselements 8 an.

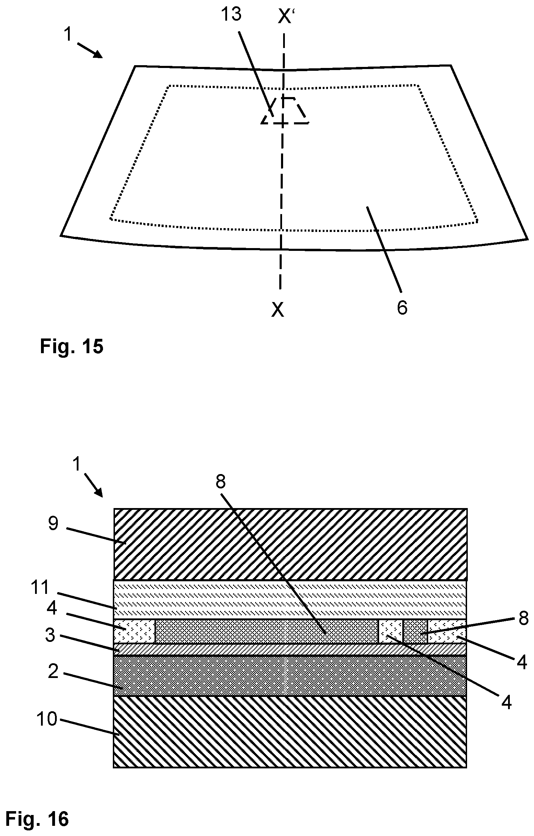

Fig. 15 zeigt eine Draufsicht auf eine weitere Ausführungsform einer mittels eines erfindungsgemäßen Verfahrens hergestellten Verbundscheibe 1 in Form einer Windschutzscheibe und in der Fig. 16 ist ein Querschnitt dieser Verbundscheibe 1 entlang der Linie X'-X dargestellt. Die in den Fig. 15 und 16 gezeigte Ausführungsform einer Verbundscheibe 1 unterscheidet sich von der in der Fig. 8 gezeigten Ausführungsform dahingehend, dass das Funktionselement 8 eine Aussparung 13, beispielsweise für ein Kamerafenster, aufweist. Die Aussparung 6 in der dritten thermoplastischen Zwischenschicht 4 ist derartig ausgeformt, dass sie die Aussparung 13 in dem Funktionselement 8 nicht mit umfasst. Auf diese Weise ist nach Anordnung des Funktionselements 8 in der Aussparung 6 der dritten thermoplastischen Zwischenschicht 4 in der Aussparung 13 des Funktionselements 8 ein Teil der dritten thermoplastischen Zwischenschicht 4 angeordnet.

### Bezugszeichenliste:

- 1: Verbundscheibe
- 2: erste thermoplastische Zwischenschicht
- 3: zweite thermoplastische Zwischenschicht
- 4: dritte thermoplastische Zwischenschicht
- 5: Vorverbund
- 6: Aussparung
- 7: Schichtenstapel
- 8: Funktionselement
- 8a: Funktionselement ohne Dünnschicht
- 9: erste Scheibe
- 10: zweite Scheibe
- 11: Schicht mit adhäsiven und/oder thermoplastischen Eigenschaften
- 12: Dünnschicht mit adhäsiven und/oder thermoplastischen Eigenschaften
- 13: Aussparung
- 14: thermoplastische Schicht
- 14a: erste thermoplastische Schicht
- 14b: zweite thermoplastische Schicht
- Z: Bereich
- X-X': Linie

## Patentansprüche

1. Verfahren zur Herstellung einer Verbundscheibe (1), wobei in der nachfolgend angegebenen Reihenfolge zumindest
a) eine erste thermoplastische Zwischenschicht (2), eine zweite thermoplastische Zwischenschicht (3) und eine dritte thermoplastische Zwischenschicht (4) vollflächig übereinander angeordnet werden;
b) die erste thermoplastische Zwischenschicht (2), die zweite thermoplastische Zwischenschicht (3) und die dritte thermoplastische Zwischenschicht (4) zu einem Vorverbund (5) verbunden werden;
c) die dritte thermoplastische Zwischenschicht (4) zur Bildung einer Aussparung (6), bereichsweise entfernt wird;
d) ein Schichtenstapel (7) gebildet wird, indem ein Funktionselement (8) in die Aussparung (6) in der dritten thermoplastischen Zwischenschicht (4) eingefügt wird;
e) der Schichtenstapel (7) zwischen einer ersten Scheibe (9) und einer zweiten Scheibe (10) angeordnet wird;
f) die erste Scheibe (9) und die zweite Scheibe (10) über den Schichtenstapel (7) durch Lamination verbunden werden;
und wobei das Funktionselement (8) eine Dicke von ≥ 50 µm aufweist und die dritte thermoplastische Zwischenschicht (4) eine Dicke aufweist, die im Wesentlichen der Dicke des Funktionselements (8) entspricht,
und die äußeren Abmessungen der Aussparung (6) im Wesentlichen den äußeren Abmessungen des Funktionselements (8) entsprechen.

2. Verfahren nach Anspruch 1, wobei Schritt d) zur Bildung des Schichtenstapels (7) zusätzlich den Schritt des vollflächigen Auflegens einer Schicht (11) mit adhäsiven und/oder thermoplastischen Eigenschaften auf das Funktionselement (8) und die dritte thermoplastische Zwischenschicht (4) umfasst.

3. Verfahren nach Anspruch 1 oder 2, wobei das Funktionselement (8) eine Dünnschicht (12) mit adhäsiven und/oder thermoplastischen Eigenschaften umfasst, die eine Oberfläche des Funktionselements (8) bildet und das Funktionselement (8) derartig in die Aussparung (6) in der dritten thermoplastischen Zwischenschicht (4) eingelegt wird, dass die Dünnschicht (12) nicht direkt benachbart zur zweiten thermoplastischen Zwischenschicht (3) angeordnet ist.

4. Verfahren nach einem der Ansprüche 1 bis 3, wobei die zweite thermoplastische Zwischenschicht (3) eine Dicke von 20 µm bis 150 µm, bevorzugt von 30 µm bis 90 µm, besonders bevorzugt von 50 µm bis 75 µm und ganz besonders bevorzugt von 50 µm aufweist.

5. Verfahren nach einem der Ansprüche 1 bis 4, wobei das Funktionselement (8) eine Dicke von 50 µm bis 1,0 mm, bevorzugt von 50 µm bis 300 µm, besonders bevorzugt von 50 µm bis 100 µm aufweist.

6. Verfahren nach einem der Ansprüche 1 bis 5, wobei die erste thermoplastische Zwischenschicht (2), die zweite thermoplastische Zwischenschicht (3) und die dritte thermoplastische Zwischenschicht (4) unabhängig voneinander ein thermoplastisches Polymer enthalten, bevorzugt zumindest Polyvinylbutyral (PVB), Ethylenvinylacetat (EVA) und/oder Polyurethan (PU), besonders bevorzugt Polyvinylbutyral (PVB).

7. Verfahren nach einem der Ansprüche 2 bis 6, wobei die Schicht (11) oder die Dünnschicht (12) ein thermoplastisches Polymer enthalten, bevorzugt zumindest Polyvinylbutyral (PVB), Ethylenvinylacetat (EVA) und/oder Polyurethan (PU), besonders bevorzugt Polyvinylbutyral (PVB).

8. Verfahren nach einem der Ansprüche 1 bis 7, wobei die dritte thermoplastische Zwischenschicht (4) aus mindestens zwei thermoplastischen Schichten (14), bevorzugt aus genau zwei thermoplastischen Schichten (14) besteht.

9. Verfahren nach einem der Ansprüche 1 bis 8, wobei die erste thermoplastische Zwischenschicht (2) Weichmacher enthält und die zweite thermoplastische Zwischenschicht (3) und die dritte thermoplastische Zwischenschicht (4) unabhängig voneinander einen geringeren Anteil an Weichmachern enthalten als die erste thermoplastische Zwischenschicht (2) oder frei von Weichmachern sind.

10. Verfahren nach Anspruch 8, wobei die erste thermoplastische Zwischenschicht (2) Weichmacher enthält und die zweite thermoplastische Zwischenschicht (3) und die thermoplastische Schicht (14) der dritten thermoplastischen Zwischenschicht (6), die direkt benachbart zur zweiten thermoplastischen Zwischenschicht (3) angeordnet ist, unabhängig voneinander einen geringeren Anteil an Weichmachern enthalten als die erste thermoplastische Zwischenschicht (2) oder frei von Weichmachern sind.

11. Verfahren nach einem der Ansprüche 1 bis 10, wobei das Funktionselement (8) eine im Infrarotbereich, im sichtbaren Bereich und/oder im UV-Bereich reflektierende Folie oder eine im Infrarotbereich, im sichtbaren Bereich und/oder im UV-Bereich absorbierende Folie oder eine Folie mit Streuwirkung oder eine holographische HUD-Folie oder ein steuerbares Funktionselement, insbesondere ein PDLC-, ein SPD-, ein, LC- ein elektrochromes oder ein elektrolumineszentes Funktionselement umfasst oder als eine solche Folie oder ein solches steuerbares Funktionselement ausgebildet ist.

12. Verfahren nach einem der Ansprüche 1 bis 11, wobei das Verbinden der ersten thermoplastischen Zwischenschicht (2), der zweiten thermoplastischen Zwischenschicht (3) und der dritten thermoplastischen Zwischenschicht (4) zu einem Vorverbund (5) in Schritt b) durch Entlüften in einem Vakuumsack unter Temperatureinwirkung oder durch das Leiten über beheizte Rollen mit anschließendem Pressen in einer Rollenpresse erfolgt.

13. Verfahren nach einem der Ansprüche 1 bis 12, wobei das Funktionselement (8) mindestens eine Aussparung (13) für ein Kommunikations-, Sensor- und/oder Kamerafenster aufweist.

## Claims

1. Method for producing a laminated pane (1), wherein in the following order at least
a) a first thermoplastic intermediate layer (2), a second thermoplastic intermediate layer (3) and a third thermoplastic intermediate layer (4) are arranged in full surface contact one above the other;
b) the first thermoplastic intermediate layer (2), the second thermoplastic intermediate layer (3) and the third thermoplastic intermediate layer (4) are bonded to form a pre-laminate (5);
c) regions of the third thermoplastic intermediate layer (4) are removed to form a recess (6);
d) a layer stack (7) is formed by a functional element (8) being inserted into the recess (6) in the third thermoplastic intermediate layer (4);
e) the layer stack (7) is arranged between a first pane (9) and a second pane (10);
f) the first pane (9) and the second pane (10) are bonded via the layer stack (7) by lamination;
and wherein the functional element (8) has a thickness of > 50 µm and the third thermoplastic intermediate layer (4) has a thickness that substantially corresponds to the thickness of the functional element (8),
and the outer dimensions of the recess (6) substantially correspond to the outer dimensions of the functional element (8).

2. Method according to claim 1, wherein step d) for forming the layer stack (7) additionally comprises the step of placing a layer (11) with adhesive and/or thermoplastic properties over the entire surface of the functional element (8) and the third thermoplastic intermediate layer (4).

3. Method according to claim 1 or 2, wherein the functional element (8) comprises a thin layer (12) with adhesive and/or thermoplastic properties which forms a surface of the functional element (8) and the functional element (8) is inserted into the recess (6) in the third thermoplastic intermediate layer (4) such that the thin layer (12) is not arranged directly adjacent to the second thermoplastic intermediate layer (3).

4. Method according to any of claims 1 to 3, wherein the second thermoplastic intermediate layer (3) has a thickness of 20 µm to 150 µm, preferably of 30 µm to 90 µm, particularly preferably of 50 µm to 75 µm and most preferably of 50 µm.

5. Method according to any of claims 1 to 4, wherein the functional element (8) has a thickness of 50 µm to 1.0 mm, preferably of 50 µm to 300 µm, particularly preferably of 50 µm to 100 µm.

6. Method according to any of claims 1 to 5, wherein the first thermoplastic intermediate layer (2), the second thermoplastic intermediate layer (3) and the third thermoplastic intermediate layer (4) independently contain a thermoplastic polymer, preferably at least polyvinyl butyral (PVB), ethylene vinyl acetate (EVA) and/or polyurethane (PU), particularly preferably polyvinyl butyral (PVB).

7. Method according to any of claims 2 to 6, wherein the layer (11) or the thin layer (12) contains a thermoplastic polymer, preferably at least polyvinyl butyral (PVB), ethylene vinyl acetate (EVA) and/or polyurethane (PU), particularly preferably polyvinyl butyral (PVB).

8. Method according to any of claims 1 to 7, wherein the third thermoplastic intermediate layer (4) consists of at least two thermoplastic layers (14), preferably of exactly two thermoplastic layers (14).

9. Method according to any of claims 1 to 8, wherein the first thermoplastic intermediate layer (2) contains plasticizers and the second thermoplastic intermediate layer (3) and the third thermoplastic intermediate layer (4) independently contain a lower proportion of plasticizers than the first thermoplastic intermediate layer (2) or are free of plasticizers.

10. Method according to claim 8, wherein the first thermoplastic intermediate layer (2) contains plasticizers and the second thermoplastic intermediate layer (3) and the thermoplastic layer (14) of the third thermoplastic intermediate layer (6), which is arranged directly adjacent to the second thermoplastic intermediate layer (3), independently contain a lower proportion of plasticizers than the first thermoplastic intermediate layer (2) or are free of plasticizers.

11. Method according to any of claims 1 to 10, wherein the functional element (8) comprises a film that reflects in the infrared range, in the visible range and/or in the UV range or a film that absorbs in the infrared range, in the visible range and/or in the UV range or a film with a scattering effect or a holographic HUD film or a controllable functional element, in particular a PDLC functional element, an SPD functional element, an LC functional element, an electrochromic functional element or an electroluminescent functional element, or is configured as such a film or such a controllable functional element.

12. Method according to any of claims 1 to 11, wherein the first thermoplastic intermediate layer (2), the second thermoplastic intermediate layer (3) and the third thermoplastic intermediate layer (4) are bonded to form a pre-laminate (5) in step b) by deaerating them in a vacuum bag under the effect of temperature or by passing them over heated rollers and subsequently pressing them in a roller press.

13. Method according to any of claims 1 to 12, wherein the functional element (8) has at least one recess (13) for a communication, sensor and/or camera window.

## Revendications

1. Procédé pour la fabrication d'un vitrage feuilleté (1), dans lequel, dans l'ordre indiqué ci-dessous, au moins
a) une première couche intermédiaire thermoplastique (2), une deuxième couche intermédiaire thermoplastique (3) et une troisième couche intermédiaire thermoplastique (4) sont superposées sur toute la surface ;
b) la première couche intermédiaire thermoplastique (2), la deuxième couche intermédiaire thermoplastique (3) et la troisième couche intermédiaire thermoplastique (4) sont assemblées en un pré-élément feuilleté (5) ;
c) la troisième couche intermédiaire thermoplastique (4) est enlevée dans certaines zones pour former un évidement (6) ;
d) un empilement de couches (7) est formé en insérant un élément fonctionnel (8) dans l'évidement (6) dans la troisième couche intermédiaire thermoplastique (4) ;
e) l'empilement de couches (7) est disposé entre une première vitre (9) et une seconde vitre (10) ;
f) la première vitre (9) et la seconde vitre (10) sont reliées par stratification par l'intermédiaire de l'empilement de couches (7) ;
et dans lequel l'élément fonctionnel (8) présente une épaisseur ≥ 50 µm et la troisième couche intermédiaire thermoplastique (4) présente une épaisseur qui correspond sensiblement à l'épaisseur de l'élément fonctionnel (8),
et les dimensions extérieures de l'évidement (6) correspondent sensiblement aux dimensions extérieures de l'élément fonctionnel (8).

2. Procédé selon la revendication 1, dans lequel l'étape d) pour former l'empilement de couches (7) comprend en outre l'étape consistant à appliquer sur toute la surface une couche (11) comportant des propriétés adhésives et/ou thermoplastiques sur l'élément fonctionnel (8) et la troisième couche intermédiaire thermoplastique (4).

3. Procédé selon la revendication 1 ou 2, dans lequel l'élément fonctionnel (8) comprend une couche mince (12) comportant des propriétés adhésives et/ou thermoplastiques qui forme une surface de l'élément fonctionnel (8), et l'élément fonctionnel (8) est inséré dans l'évidement (6) dans la troisième couche intermédiaire thermoplastique (4) de telle sorte que la couche mince (12) n'est pas disposée de manière à être directement adjacente à la deuxième couche intermédiaire thermoplastique (3).

4. Procédé selon l'une des revendications 1 à 3, dans lequel la deuxième couche intermédiaire thermoplastique (3) présente une épaisseur allant de 20 µm à 150 µm, de préférence de 30 µm à 90 µm, plus préférablement de 50 µm à 75 µm et de manière tout particulièrement préférée de 50 µm.

5. Procédé selon l'une des revendications 1 à 4, dans lequel l'élément fonctionnel (8) présente une épaisseur allant de 50 µm à 1,0 mm, de préférence de 50 µm à 300 µm, de manière particulièrement préférée de 50 µm à 100 µm.

6. Procédé selon l'une des revendications 1 à 5, dans lequel la première couche intermédiaire thermoplastique (2), la deuxième couche intermédiaire thermoplastique (3) et la troisième couche intermédiaire thermoplastique (4) contiennent, indépendamment les unes des autres, un polymère thermoplastique, de préférence au moins polyvinylbutyral (PVB), éthylène-acétate de vinyle (EVA) et/ou polyuréthane (PU), de manière particulièrement préférée polyvinylbutyral (PVB).

7. Procédé selon l'une des revendications 2 à 6, dans lequel la couche (11) ou la couche mince (12) contient un polymère thermoplastique, de préférence au moins polyvinylbutyral (PVB), éthylène-acétate de vinyle (EVA) et/ou polyuréthane (PU), de manière particulièrement préférée polyvinylbutyral (PVB).

8. Procédé selon l'une des revendications 1 à 7, dans lequel la troisième couche intermédiaire thermoplastique (4) est constituée d'au moins deux couches thermoplastiques (14), de préférence d'exactement deux couches thermoplastiques (14).

9. Procédé selon l'une des revendications 1 à 8, dans lequel la première couche intermédiaire thermoplastique (2) contient des plastifiants et la deuxième couche intermédiaire thermoplastique (3) et la troisième couche intermédiaire thermoplastique (4) contiennent, indépendamment l'une de l'autre, une proportion de plastifiants plus faible que celle de la première couche intermédiaire thermoplastique (2) ou sont exemptes de plastifiants.

10. Procédé selon la revendication 8, dans lequel la première couche intermédiaire thermoplastique (2) contient des plastifiants et la deuxième couche intermédiaire thermoplastique (3) et la couche thermoplastique (14) de la troisième couche intermédiaire thermoplastique (6) qui est disposée de manière à être directement adjacente à la deuxième couche intermédiaire thermoplastique (3) contiennent, indépendamment l'une de l'autre, une proportion de plastifiants plus faible que celle de la première couche intermédiaire thermoplastique (2) ou sont exemptes de plastifiants.

11. Procédé selon l'une des revendications 1 à 10, dans lequel l'élément fonctionnel (8) comprend un film réfléchissant dans le domaine infrarouge, dans le domaine visible et/ou dans le domaine UV ou un film absorbant dans le domaine infrarouge, dans le domaine visible et/ou dans le domaine UV ou un film à effet diffusant ou un film HUD holographique ou un élément fonctionnel pouvant être commandé, en particulier un élément fonctionnel PDLC, un élément fonctionnel SPD, un élément fonctionnel LC, un élément fonctionnel électrochrome ou un élément fonctionnel électroluminescent, ou est conçu comme un tel film ou un tel élément fonctionnel pouvant être commandé.

12. Procédé selon l'une des revendications 1 à 11, dans lequel la liaison de la première couche intermédiaire thermoplastique (2), de la deuxième couche intermédiaire thermoplastique (3) et de la troisième couche intermédiaire thermoplastique (4) pour former un pré-élément feuilleté (5) est réalisé à l'étape b) par désaération dans un sac sous vide sous l'effet de la température ou par le passage sur des rouleaux chauffés suivi d'un pressage dans une presse à rouleaux.

13. Procédé selon l'une des revendications 1 à 12, dans lequel l'élément fonctionnel (8) présente au moins un évidement (13) pour une fenêtre de communication, une fenêtre pour capteur et/ou une fenêtre pour caméra.
